# EUROPEAN PATENT APPLICATION

(11) **EP 2 626 842 A1**
(43) Date of publication of application: **14.08.2013**
(21) Application number: 13154575.8
(22) Date of filing: 08.02.2013
(51) Int. Cl.: G07F 15/00, G06Q 20/18, G07F 11/00

(54) **Plug-in electric vehicle charging station with vending machine payment options**

(30) Priority: 10.02.2012 US 201213370879
(71) Applicant: General Electric Company, Schenectady, New York 12345 (US)
(72) Inventor: Errattuparambil, Moosa Aneesh, Atlanta, GA Georgia 30339 (US); Glazebrook, Michael George, Atlanta, GA Georgia 30339 (US)
(74) Representative: Picker, Madeline Margaret

(57) **Abstract**

A plug-in electric vehicle charging station 110 includes a plug-in electric vehicle interface 111 configured to process payment for charging a plug-in electric vehicle 105, and to process payment for vending items from a vending machine and a communications interface 113 communicatively coupled to the plug-in electric vehicle interface, and configured to communicate with the vending machine 125.

## Description

### BACKGROUND OF THE INVENTION

The subject matter disclosed herein relates to plug-in electric vehicles, and more particularly to plug-in electric vehicle charging stations that include payment options for nearby vending machines.

A plug-in electric vehicle (PEV) includes batteries that can be recharged by connecting a plug to an electric power source (such as wall sockets). The electricity may then be stored onboard the vehicle using a battery, flywheel, super capacitor, fuel cell or other means suitable for a purpose disclosed herein. PEVs are a growing segment of vehicular traffic. A PEV owner may have one or more charging stations at their residence. In addition, municipalities and commercial establishments may also provide public charging stations. Such public charging stations require payment for the use of the electricity. As such, the charging stations include a payment interface, such as a credit card or debit card reader. Typically, a PEV owner must wait a period of time, which can be up to two or more hours, while the PEV charges. Accordingly, there are commercial opportunities while the owner is waiting for the PEV to electrically charge.

### BRIEF DESCRIPTION OF THE INVENTION

According to one aspect of the invention, a plug-in electric vehicle charging station is described. The plug-in vehicle charging station includes a plug-in electric vehicle interface configured to process payment for charging a plug-in electric vehicle, and to process payment for vending items from a vending machine and a communications interface communicatively coupled to the plug-in electric vehicle interface, and configured to communicate with the vending machine.

According to another aspect of the invention, a plug-in electric vehicle charging system is described. The plug-in vehicle charging system includes a plug-in electric vehicle charging station and a vending machine communicatively coupled to the plug-in electric vehicle charging station and configured to dispense items prepaid at the plug-in electric vehicle charging station.

According to yet another aspect of the invention, a computer program product including a non-transitory computer readable medium storing instructions for causing a computer to implement a method. The method includes receiving, in a plug-in electric vehicle interface, a request to charge a plug-in electric vehicle, generating options, on the plug-in electric vehicle interface, to purchase vending items, receiving, in the plug-in electric vehicle interface, payment information for the vending items and generating, on the plug-in electric vehicle interface, a verification code to complete a purchase of the vending items.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates an example rechargeable electric vehicle (REV) charging station system;
FIG. 2 illustrates an example embodiment of a computing device system for payment processing of the REV charging and vending items; and
FIG. 3 illustrates a flow chart of a method for coordinating payment options between a charging station and vending machines in accordance with example embodiments.

The detailed description explains embodiments of the invention, together with advantages and features, by way of example with reference to the drawings.

### DETAILED DESCRIPTION OF EMBODIMENTS OF THE INVENTION

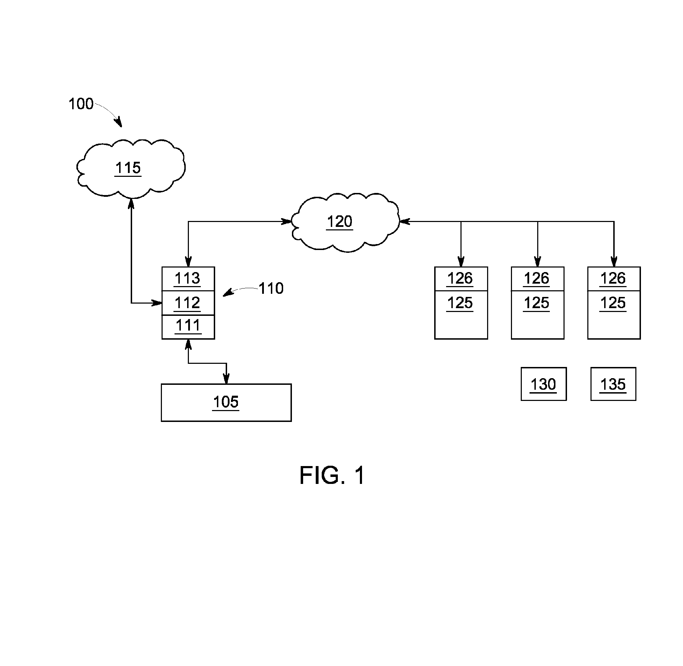

FIG. 1 illustrates an example rechargeable electric vehicle (REV) charging station system 100. It will be appreciated that several types of REVs are contemplated herein including PEVs. As such, the REVs described herein include part are not limited to vehicles that can be plugged in or inductively charged, for example. The REVs described herein include a rechargeable energy storage device. The system 100 is configured to interface with an REV 105. For illustrative purposes, the REV 105 is described as an electric vehicle (EV) that can be electrically charged by a charging station 110. It will be appreciated that the REV 105 can be any EV that uses batteries, or any other energy storage apparatus suitable for a purpose disclosed herein, that can be charged by an off-board source (e.g., the charging station 110), and uses an electric motor(s) as a primary means of propulsion. As such, the REV 105 can be, and is not limited to: Battery (only) highway capable electric vehicles (BEVs); plug-in hybrid electric vehicles (PHEVs); neighborhood electric vehicles restricted in speed for non-highway (NEVs); and personal electric vehicles such as golf carts, scooters, motorcycles and the like.

In example embodiments, the charging station 110 is any interface that enables connection between the REV 105 and an electricity grid 115. The charging station 110 enables utility companies to manage the electricity demands of the electric vehicles (e.g., the REV 105) that interface with the charging station 110 and properly bill electricity used by the vehicles to their owners. The charging station 110 can be any public, semi-public interface made available by local governments, and property and business owners. In example embodiments, the charging station 110 encourages consumer use of the charging station 110 by implementing the ability to pay for purchases at nearby vending machines 125 as described herein. The charging station 110 includes a REV interface 111 into which the REV 105 can be plugged for charging. The REV interface 111 also includes a user interface in which an owner of the REV 105 can select charging and payment options. The REV interface 111 can also include security and authentication options, enabling the owner to make secure payments, to interface a smart device (e.g., smart phone, laptop, tablet and the like) to make payments or redeem awards. It can be appreciated that the REV interface 111 can include many features for user interaction. In example embodiments, the REV interface 111 also enables an owner to pre-purchase items from the nearby vending machines 125, and receives a code that can then be used at the vending machines 125 to complete the purchases.

The charging station 110 further includes an electricity grid interface 112 from which the charging station 110 receives and distributes electrical power. The electricity grid 115 is illustrated as a generalized power distribution network. It can be appreciated that the electricity grid 115 is any interconnected network for delivering electricity from suppliers to consumers, including, but not limited to: 1) generating plants that produce electricity from combustible fuels (coal, natural gas, biomass) or non-combustible fuels (wind, solar, nuclear, hydro power); 2) transmission lines that carry electricity from power plants to demand centers; 3) transformers that reduce voltage so distribution lines carry power for final delivery; and 4) any control centers such as but not limited to energy management systems, distribution management systems, and outage management systems. The electricity grid therefore has operations including but not limited to: 1) electricity generation; 2) electric power transmission; and 3) electricity distribution and control.

The charging station 110 further includes a communications interface 113 that interacts with any suitable communications network 120, which is illustrated as any generalized communications network. The communications network 120 can be a direct connection between the charging stations via the communications interface 113 on the charging station and communications interfaces 126 on the vending machines 125, implementing any suitable communications protocol including but not limited to: zigby, WiMax, WiFi, LAN, RS-485, and RS-232. The communications network can also be any suitable global system including but not limited to: 1) a global system of interconnected computer networks (e.g., the Internet), a cellular telephone, global system for mobile communications (GSM) and the like.

In example embodiments, the owner of the REV 105 can access the REV interface 111 in order to access options to purchase items from the vending machines 125. The owner can either access the vending machine options during charging, prior to charging or after charging. It can be appreciated that several options and incentives related to item purchase are contemplated. For example, the REV interface 111 can provide an incentive for reduced price on vending items if a full charge or an extended charge is purchased. In example embodiments, the owner can use a charge card (e.g., debit or credit card) 130 to purchase both the charge time as well as the vending items. In this way, as the REV interface 111 processes the charge for the electrical use, the REV interface 111 can also process the charge for the vending items. As such, the owner is encouraged to use the vending machines 125 without the need to look for coins or dollar bills, allowing the owner to pay for both the charging of the REV 105 and usage of the vending machines with one swipe of the charge card 130. It is understood that the charge card 130 can be any suitable card for payment including gift cards that can be used with the charging station 110. It is also understood that the REV interface 111 can include the ability to receive dollars and coins. In example embodiments, the REV interface 111 can be customized to prompt messages for various selections for the vending machines 125, and when the owner connects the REV 105 to the charging station 110, the REV interface 111 prompts the owner about choices for the vending machines 125. Therefore, with a single swipe of the charge card 130, the owner (or any driver or passenger given permission) can pay for charging the REV 150 as well as items bought from the vending machines 125.

In example embodiments, when the selections are made for the vending machines 125, a verification code (e.g., an alphanumeric figure) is generated. The verification code can be entered into the vending machines 125, which completes the transaction by dispensing the selected items to the owner. The verification code can merely be displayed on the REV interface 111 for the owner to note and manually enter into the vending machines 125. The verification code can also be generated in a form factor such as but not limited to, a receipt displaying the code or awards card 135 having a monetary value, which can be used on the vending machines 125. The verification code can also be encoded to a receipt or to the charge card 130 or rewards card 135. In other examples, the transaction and/or information related to the charge card 130 can be communicated to the vending machines 125 from the charging station 110 over the communications network 120. The owner can then once again swipe the card in the vending machines 125, which then recognize the charge card 130 and associate the paid transaction, thereby allowing dispensation of the selected items. It can be appreciated that there are many ways in which the transaction can be communicated to the vending machines 125 from the charging station 110. For example, the verification code can be authenticated by passing the verification code over the communications network 120, storing the verification code on the vending machines 125 and cross checking the verification code with the form factor on which the verification code is stored.

There are many examples in how the system 100 can be implemented. For example, the charging station 110 can be located at "rest areas" along interstate highways and help travelers charge the REV 105 when they are on road. Rest areas often include several stores and vending machines, all of which can have items that can be pre-purchased at the charging station. In addition, the REV interface 111 can further generate verification codes that can be redeemed at restaurants or other stores in the rest area. Similar charging systems can be disposed in shopping malls and generate codes that can be used anywhere in the mall. In this way, shopping in the mall is encouraged while promoting charging at the mall. Several large commercial establishments, such as home improvement stores, grocery stores and the like may have vending machines at the entrance. The commercial establishments can dispose charging stations in the area to boost business and vending machine use. Work areas can also include vending machines which can be associated with charging stations at the place of business. In another example, recreational parks can set up vending areas and charging stations as described herein.

The charging station 110 can include a computing device to manage the payment transactions and coordinate the REV interface 111, the electricity grid interface 112, and the communications interface 113 described herein. The computing device can be any computing device as now described.

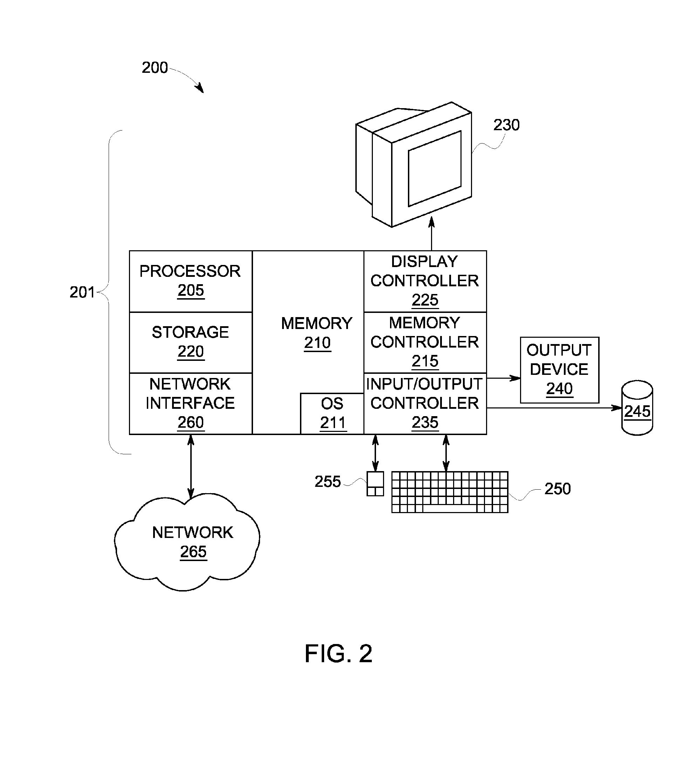

FIG. 2 illustrates an example embodiment of a computing device system 200 for payment processing of the REV charging and vending items as described herein. The methods described herein can be implemented in software (e.g., firmware), hardware, or a combination thereof. In example embodiments, the methods described herein are implemented in software, as an executable program, and is executed by a special or general-purpose digital computer, such as a personal computer, workstation, minicomputer, or mainframe computer. The system 200 therefore includes general-purpose computer 201.

In example embodiments, in terms of hardware architecture, as shown in FIG. 2, the computer 201 includes a processor 205, memory 210 coupled to a memory controller 215, and one or more input and/or output (I/O) devices 240, 245 (or peripherals) that are communicatively coupled via a local input/output controller 235. The input/output controller 235 can be, but is not limited to, one or more buses or other wired or wireless connections, as is known in the art. The input/output controller 235 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 205 is a hardware device for executing software, particularly that stored in memory 210. The processor 205 can be any custom made or commercially available processor, a central processing unit (CPU), an auxiliary processor among several processors associated with the computer 201, a semiconductor based microprocessor (in the form of a microchip or chip set), a macroprocessor, or generally any device for executing software instructions.

The memory 210 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 210 may incorporate electronic, magnetic, optical, and/or other types of storage media. Note that the memory 210 can have a distributed architecture, where various components are situated remote from one another, but can be accessed by the processor 205.

The software in memory 210 may include one or more separate programs, each of which comprises an ordered listing of executable instructions for implementing logical functions. In the example of FIG. 2, the software in the memory 210 includes the payment processing methods described herein in accordance with example embodiments and a suitable operating system (OS) 211. The OS 211 essentially controls the execution of other computer programs, such the payment processing systems and methods as described herein, and provides scheduling, input-output control, file and data management, memory management, and communication control and related services.

The payment processing methods described herein may be in the form of a source program, executable program (object code), script, or any other entity comprising a set of instructions to be performed. When a source program, then the program needs to be translated via a compiler, assembler, interpreter, or the like, which may or may not be included within the memory 210, so as to operate properly in connection with the OS 211. Furthermore, the payment processing methods can be written as an object oriented programming language, which has classes of data and methods, or a procedure programming language, which has routines, subroutines, and/or functions.

In example embodiments, a conventional keyboard 250 and mouse 255 can be coupled to the input/output controller 235. Other output devices such as the I/O devices 240, 245 may include input devices, for example but not limited to a printer, a scanner, microphone, and the like. The I/O devices 240, 245 may further include devices that communicate both inputs and outputs, for instance but not limited to, a network interface card (NIC) or modulator/demodulator (for accessing other files, devices, systems, or a network), a radio frequency (RF) or other transceiver, a telephonic interface, a bridge, a router, and the like. The I/O devices 240, 245 can further include the vending machines 125. The system 200 can further include a display controller 225 coupled to a display 230. In example embodiments, the system 200 can further include a network interface 260 for coupling to a network 265. The network 265 can be an IP-based network for communication between the computer 201 and any external server, client and the like via a broadband connection. The network 265 transmits and receives data between the computer 201 and external systems. In example embodiments, network 265 can be a managed IP network administered by a service provider. The network 265 may be implemented in a wireless fashion, e.g., using wireless protocols and technologies, such as WiFi, WiMax, etc. The network 265 can also be a packet-switched network such as a local area network, wide area network, metropolitan area network, Internet network, or other similar type of network environment. The network 265 may be a fixed wireless network, a wireless local area network (LAN), a wireless wide area network (WAN) a personal area network (PAN), a virtual private network (VPN), intranet or other suitable network system and includes equipment for receiving and transmitting signals.

If the computer 201 is a PC, workstation, intelligent device or the like, the software in the memory 210 may further include a basic input output system (BIOS) (omitted for simplicity). The BIOS is a set of essential software routines that initialize and test hardware at startup, start the OS 211, and support the transfer of data among the hardware devices. The BIOS is stored in ROM so that the BIOS can be executed when the computer 201 is activated.

When the computer 201 is in operation, the processor 205 is configured to execute software stored within the memory 210, to communicate data to and from the memory 210, and to generally control operations of the computer 201 pursuant to the software. The payment processing methods described herein and the OS 211, in whole or in part, but typically the latter, are read by the processor 205, perhaps buffered within the processor 205, and then executed.

When the systems and methods described herein are implemented in software, as is shown in FIG. 2, the methods can be stored on any computer readable medium, such as storage 220, for use by or in connection with any computer related system or method.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In example embodiments, where the payment processing methods are implemented in hardware, the payment processing methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

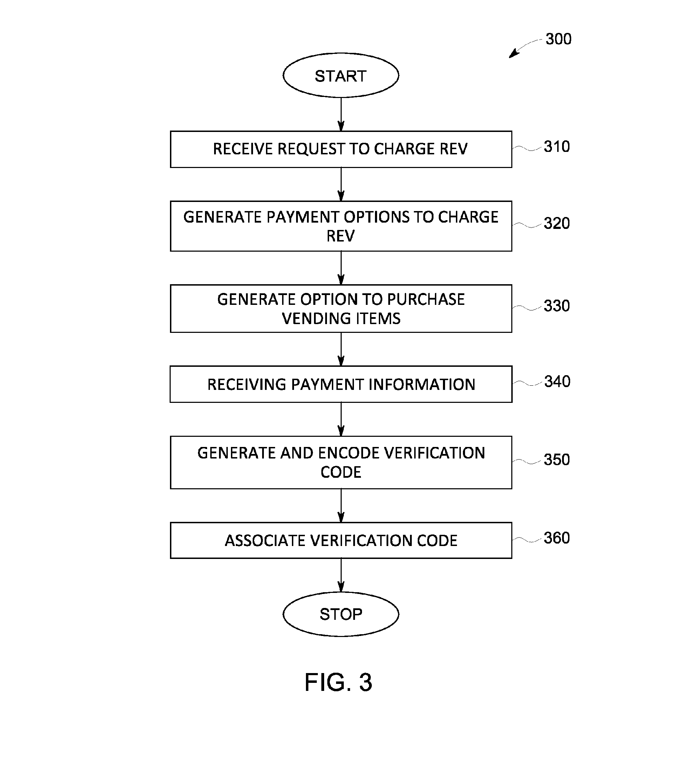

FIG. 3 illustrates a flow chart of a method 300 for coordinating payment options between the charging station 110 and the vending machines 125 as described herein and in accordance with example embodiments. At block 310, the REV interface 111 receives a request from the owner to charge the REV 105. At block 320, the REV interface 111 generates payment options to charge the REV 105. At block 330, the charging station 110 generates options on the REV interface 111, which can be via a graphical user interface, to purchase vending items from the vending machines. In example embodiments, the owner can also enter a request to pay for charging time at the charging station 110. At block 340, the REV interface 111 receives payment information from the owner. The payment information, such as the charge card 130, is used to process payment for any charging time purchased as well as any vending items purchased. If the owner selected to the option to purchase vending items, then at block 350, the REV interface 111 generates a verification code to complete the purchase of the vending items at the vending machines 125 as described herein. In addition, the verification code can be encoded in a form factor such as but not limited to a receipt displaying the code or awards card 135 having a monetary value. At block 360, the verification code is associated with the form factor.

Technical effects include encouraging and increasing commercial activities associated with charging stations and vending machines, combining commercial activities thereby reducing the number of charge card transactions and associated fees, and the use of currency.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rechargeable electric vehicle (REV) charging station (110), comprising:
a REV interface (111) configured to process a payment for electrically charging a REV (105), and to process the payment for at least one vending item purchased from a vending machine (125); and
a communications interface (113) communicatively coupled to the REV interface(111), and configured to communicate with the vending machine (125).

2. The REV charging station as claimed in Claim 1 further comprising an electricity grid interface (112) communicatively coupled to the REV interface (111), and configured to receive electrical energy from an electrical grid and distribute the electrical energy to the REV.

3. The REV charging station as claimed in Claim 1 or Claim 2 wherein the REV interface (111) is further configured to generate a verification code indicative that the payment for the vending items has been received.

4. The REV charging station as claimed in Claim 3 wherein at least one of:
the verification code is encoded to at least one of a charge card, a rewards card, and a receipt;
the verification code is associated, via the communications interface, with a charge card associated with the payment of the at least one vending item, and
the REV interface is further configured to authenticate the verification code.

5. A rechargeable electric vehicle (REV) charging system (100), comprising:
a REV charging station (110); and
a vending machine (125) communicatively coupled to the REV charging station (110) and configured to dispense at least one item prepaid at the REV charging station.

6. The system as claimed in Claim 5 wherein the REV charging station, comprises:
a REV interface (111) configured to a process payment for electrically charging a REV (105), and to process the payment for the at least one item purchased from the vending machine; and
a communications (113) interface communicatively coupled to the REV interface (111), and configured to communicate with the vending machine (125).

7. The system as claimed in Claim 6 wherein the REV charging station further comprises an electricity grid interface (112) communicatively coupled to the REV interface (111), and configured to receive electrical energy from an electrical grid and distribute the electrical energy to the REV.

8. The system as claimed in Claim 6 or Claim 7 wherein the REV interface (111) is further configured to generate a verification code indicative that the payment for the at least one item purchased from the vending machine has been received.

9. The system as claimed in Claim 8 wherein at least one of:
the verification code is encoded to at least one of a charge card, a rewards card, and a receipt;
the verification code is associated, via the communications interface, with a charge card associated with the payment of at least one item, and
the REV interface is further configured to authenticate the verification code.

10. The system as claimed in any one of Claims 5 to 9 further comprising at least one of:
a communications network (120) communicatively coupled between the REV charging station and the vending machine, and
an electricity grid connection operatively coupled to the REV charging station.

11. A computer program product including a non-transitory computer readable medium storing instructions for causing a computer to implement a method, the method comprising:
receiving, in a rechargeable electric vehicle (REV) interface, a request to electrically charge a REV;
generating options, on the REV interface, to purchase at least one vending item;
receiving, in the REV interface, a payment information for the at least one vending item; and
generating, on the REV interface, a verification code to complete the purchase of the at least one vending item.

12. The computer program product as claimed in Claim 11, wherein the method further comprises generating, on the REV interface, a payment options to electrically charge the REV.

13. The computer program product as claimed in Claim 12 wherein a payment options to electrically charge the REV includes a charge card.

14. The computer program product as claimed in Claim 11, 12 or 13 wherein the method further comprises encoding, by the computer, the verification code into a form factor.

15. The computer program product as claimed in Claim 11, 12, 13 or 14 wherein the method further comprises at least one of associating, via the computer, the verification code with a charge card, and encoding, by the computer, the verification code in at least one of an awards card and a receipt.
